# EUROPEAN PATENT APPLICATION

(11) **EP 3 822 878 A2**
(43) Date of publication of application: **19.05.2021**
(21) Application number: 21166353.9
(22) Date of filing: 31.03.2021
(51) Int. Cl.: G06Q 10/00

(54) **METHOD AND APPARATUS FOR FORECASTING DEMAND FOR TALENT, DEVICE, STORAGE MEDIUM, AND COMPUTER PROGRAM PRODUCT**

(30) Priority: 08.05.2020 CN 202010383717
(71) Applicant: Baidu Online Network Technology (Beijing) Co., Ltd., Beijing 100085 (CN)
(72) Inventor: ZHANG, Qi, Beijing 100085 (CN); ZHU, Hengshu, Beijing 100085 (CN); WANG, Peng, Beijing 100085 (CN); SUN, Ying, Beijing 100085 (CN)
(74) Representative: Lucke, Andreas

(57) **Abstract**

A method and apparatus for forecasting a talent demand, a device, a storage medium and a computer program product are provided. An implementation of the method may include: determining, based on historical recruitment data, a target talent demand time series and an auxiliary talent demand time series; fusing the target talent demand time series and the auxiliary talent demand time series, to obtain a forward demand time series; and determining, based on the forward demand time series, new demand information for the target talent.

## Description

### TECHNICAL FIELD

Embodiments of the present disclosure relate to the technical field of data processing, particularly to the technical field of artificial intelligence, and more particularly to a method and apparatus for forecasting demand for a talent, a device and a storage medium.

### BACKGROUND

Technology of forecasting demand for a talent refers to a technology that forecasts the future demand of a company for a talent based on historical demand data. The forecasting the demand for the talent is of great significance to enterprises, individuals, and governments. How to improve the accuracy and efficiency of forecasting the demand for a talent is a difficult problem in industry.

Relevant technologies that forecast the demand for a talent from the aspect of job skills only reflect the market's demand for skills, but ignore the company's, as the main body, demand for a talent, resulting in lack of pertinence and low accuracy.

### SUMMARY

Provided are a method and apparatus for forecasting a talent demand, a device and a storage medium.

According to the first aspect, a method for forecasting demand for a talent is provided, including: determining, based on historical recruitment data, a target talent demand time series and an auxiliary talent demand time series; fusing the target talent demand time series and the auxiliary talent demand time series, to obtain a forward demand time series; and determining, based on the forward demand time series, new demand information for the target talent.

According to the second aspect, an embodiment of the present disclosure discloses an apparatus for forecasting demand for a talent, including: a time series determination module, configured to determine, based on historical recruitment data, a target talent demand time series and an auxiliary talent demand time series; a forward time series determination module, configured to fuse the target talent demand time series and the auxiliary talent demand time series, to obtain a forward demand time series; and an information determination module, configured to determine, based on the forward demand time series, new demand information for the target talent.

According to the third aspect, an embodiment of the present disclosure discloses an electronic device, including: at least one processor; and a memory communicatively connected with the at least one processor; where, the memory stores instructions executable by the at least one processor, and the instructions, when executed by the at least one processor, causes the at least one processor to execute the method described according to any embodiment of the present disclosure.

According to a fourth aspect, an embodiment of the present disclosure discloses a non-transitory computer-readable storage medium storing computer instructions, the computer instructions, when executed by a processor, cause the processor to execute the method according to any embodiment of the present disclosure.

According to a fifth aspect, an embodiment of the present disclosure discloses a computer program product. The computer program product includes a computer program, the computer program, when executed by a processor, causes the processor to implement the method according to any embodiment of the present disclosure.

The technology according to the present disclosure improves the pertinence of company's talent demand forecasting, and improves the accuracy of talent demand forecasting.

It should be understood that the content described in this section is neither intended to identify key or important properties of the embodiments of the present disclosure, nor intended to limit the scope of the present disclosure. Other properties of the present disclosure will be easily understood through the following description.

### BRIEF DESCRIPTION OF THE DRAWINGS

The accompanying drawings are used to better understand the solution and do not constitute limitations to the scope of the present disclosure. In the drawings:
Fig. 1 is a schematic flowchart of a method for forecasting demand for a talent according to an embodiment of the present disclosure;
Fig. 2 is a schematic flowchart of a method for forecasting demand for a talent according to an embodiment of the present disclosure;
Fig. 3 is a schematic flowchart of a method for forecasting demand for a talent according to an embodiment of the present disclosure;
Fig. 4A is a flowchart of demand for talent forecasting based on an attention mechanism in a method for forecasting demand for a talent according to an embodiment of the present disclosure;
Fig. 4B is a structure diagram of a neural network model based on an attention mechanism in a method for forecasting demand for a talent according to an embodiment of the present disclosure;
Fig. 5 is a schematic structural diagram of an apparatus for forecasting demand for a talent according to an embodiment of the present disclosure; and
Fig. 6 is a block diagram of an electronic device used to implement the method for forecasting demand for a talent according to embodiments of the present disclosure.

### DETAILED DESCRIPTION OF EMBODIMENTS

Example embodiments of the present disclosure will be described below in combination with the accompanying drawings, which include various details of embodiments of the present disclosure to facilitate understanding and should be regarded as merely exemplary. Therefore, it should be appreciated by those of ordinary skill in the art that various changes and modifications can be made to the embodiments described here without departing from the scope and spirit of the present disclosure. Likewise, for clarity and conciseness, descriptions of well-known functions and structures are omitted in the following description.

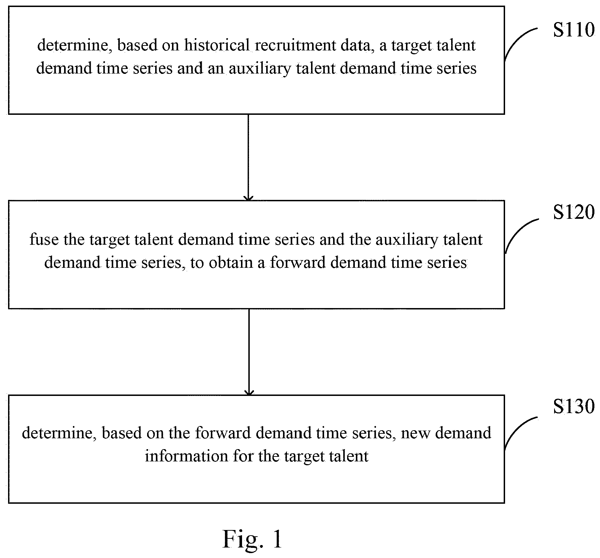

Fig. 1 is a schematic flowchart of a method for forecasting the demand for a talent according to an embodiment of the present disclosure. The embodiment is applicable to a situation of targeted forecasting for a company's future demand for a talent based on the company's public historical recruitment data. The method may be executed by an apparatus for forecasting the demand for a talent. The apparatus may be implemented by means of software and/or hardware, and may be integrated in an electronic device, for example, the device may be an electronic device with communication and computing capabilities such as a back-end server. As shown in Fig. 1, the method for forecasting the demand for a talent according to the embodiment may include:

S110: determining, based on historical recruitment data, a target talent demand time series and an auxiliary talent demand time series.

The historical recruitment data refers to historical recruitment data published by various companies through various channels. For example, company recruitment data in recruitment software on the Internet are collected and stored. Large-scale data may be managed by using a cluster. The collected recruitment data is desensitized to remove personal information from the recruitment data, and only company and position related recruitment demand data is retained, to form the historical recruitment data, and then the historical recruitment data is analyzed.

Target talent refers to the object to be forecasted for recruitment, for example, the target talent refers to a to-be-forecasted demand of a target company on a target position, where a target position may be one target position or at least two target positions, the number of target position is not limited herein, and the target talent may refer to a to-be-forecasted demand of a target company on all positions. Target talent may also refer to a demand of a target position in a target company, likewise, the target company may be one target company or at least two target companies, the number of the target company is not limited herein, and the target talent may refer to a demand of a target position in all companies. The specific setting of the target talent can be determined according to the actual forecasting situation, which is not limited here.

Auxiliary talent is another demand object that provides reference for the determination of target talent. The setting of auxiliary talent may refer to the specific setting of target talent. For example, if the target talent refers the demand of a target company on a target position, the auxiliary talent may include the demand of the target company on other positions or the demand of other companies on the target position. That is, relevant information of the target talent may be determined from the auxiliary talent. Due to the incompleteness of historical recruitment data, the target talent information may be missing, instable and/or periodically non-obvious. The introduction of auxiliary talent to supplement the target talent may cause the demand information for a talent to be determined from a plurality of aspects and at different levels, thereby improving the completeness, stability and periodicity of the demand information for a talent. Similarly, if the target talent refers the demand of a target position in a target company, the auxiliary talent may include the demand of the target position in other companies and/or the demand of another position in the target company.

The talent demand time series may reflect demand quantity for a talent in different time periods determined based on the historical recruitment data, for example, demand quantity for a talent to be recruited published by company A on position 1 from 2014 to each month of 2020. Correspondingly, the target talent demand time series may refer to a series composed of quantities of the target talent required per unit time period in a time interval, and the auxiliary talent demand time series refers to a series composed of quantities of an auxiliary talent required per unit time period in the time interval.

Specifically, an auxiliary talent is determined according to the target talent to be forecasted, and recruitment quantities for a talent in different time periods are determined based on the recruitment data for a target talent and an auxiliary talent in the historical recruitment data, thus forming the target talent demand time series and the auxiliary talent demand time series. As an example, if the target talent are determined to be a demand of a target company on a target position, the corresponding auxiliary talent may include the demands of a target company on all positions, the demands of a target position in all companies, and/or the demands of all companies on all positions. In the auxiliary talent, the demands of the target company on all positions may reflect the overall recruitment of this company; the demand of the target position in all companies may reflect the recruitment of this position on the entire talent market; and the demand of all companies on all positions may reflect the overall recruitment of the talent market. Therefore, relevant information of the target talent may be indirectly acquired from the auxiliary talent. Information about recruitment quantities of a target company on a target position over time, a recruitment demand time series of the target company on all positions, a recruitment demand time series of the target position on the entire talent market, a recruitment demand time series of the entire talent market, and the like are respectively acquired based on the historical recruitment data, to construct multivariate time series.

The target talent demand time series and the auxiliary talent demand time series reflect the information of the changes of talent recruitment over time at different levels from the position level to the company level to the entire market level, and talent demand time series at different levels may supplement the insufficiencies of fine-grained demand time series, thereby improving the accuracy of the new demand information from the talent demand time series.

S120: fusing the target talent demand time series and the auxiliary talent demand time series, to obtain a forward demand time series.

The fusing operation refers to concatenating a plurality of series based on series properties, to improve the accuracy and reliability of series information and avoid mixing irrelevant information.

Specifically, for the determined target talent demand time series and auxiliary talent demand time series, the time series may be concatenated based on the same time and/or the same position in the time series, to obtain the forward demand time series. That is, at least two time series are fused into a complete time series. As an example, weight values of different time series maybe determined according to the importance of the trend and periodicity in the talent demand time series, and all the time series are concatenated based on the weight values, to improve the accuracy of the fused forward demand time series.

S130: determining, based on the forward demand time series, new demand information for the target talent.

The new demand information refers to a recruitment demand for the target talent in the future. For example, the new demand information refers to a recruitment demand of a target company on a target position in in the next three months. The determination of the new demand information can clarify the change trend of company's demand for a talent on each position in the future and the change trend of the demand for a talent of the future talent market on any position, thereby improving the company's talent competitiveness and monitoring the talent supply and demand of the talent market from a macro perspective.

Specifically, based on the change trend and change cycle of the target talent reflected in the forward demand time series, the future change trend and change cycle of the target talent are determined and then the new demand information is determined.

As an example, if the target talent refers to a demand of a target company on a target position, the change trend of the recruitment quantity of a target company on the target position in the next year is determined based on the change trend and change cycle of recruitment quantity of the target company on the target position, which is reflected by the forward demand time series at multiple levels. For example, the recruitment quantity of the target company on the target position is increasing year by year, then the next recruitment quantity of the target company on the target position may be forecasted based on this trend. The forward demand time series includes not only demand information of the target company on the target position, but also other demand information, that is, it reflects the change trend at the level of the entire talent market, thereby improving the accuracy of determining the new demand information of target talents.

According to the technical solution of the embodiment of the present disclosure, a target talent demand time series and an auxiliary talent demand time series are determined by analyzing company's historical recruitment data, and new demand information for a target talent is determined based on a historical trend of company's talent demand, thereby improving the pertinence of company's talent demand forecasting; and demand information for a talent is determined from multiple aspects based on the target talent demand time series and the auxiliary talent demand time series, thereby improving the accuracy of talent demand forecasting.

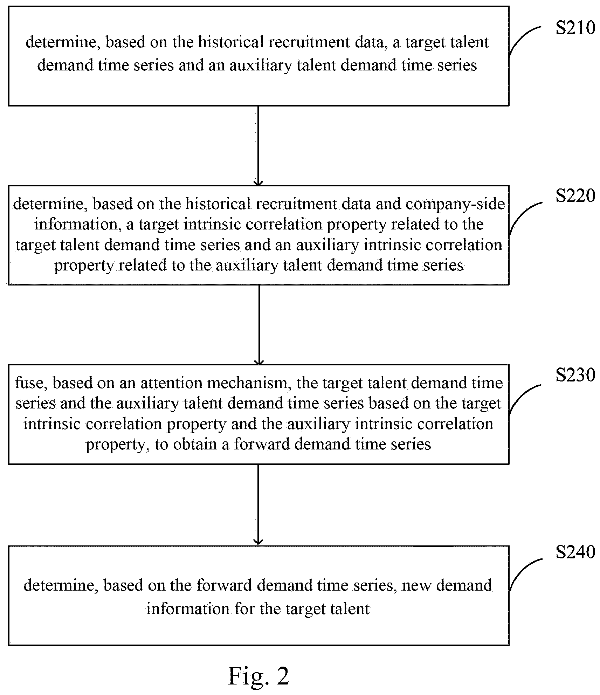

Fig. 2 is a flowchart of a method for forecasting a demand for a talent according to an embodiment of the present disclosure. The embodiment of the present disclosure is optimized on the basis of the technical solutions of the foregoing embodiment.

Alternatively, the operation "fusing the target talent demand time series and the auxiliary talent demand time series to obtain a forward demand time series" is refined into "determining, based on the historical recruitment data and company-side information, a target intrinsic correlation property related to the target talent demand time series and an auxiliary intrinsic correlation property related to the auxiliary talent demand time series ; and fusing, based on an attention mechanism, the target talent demand time series and the auxiliary talent demand time series based on the target intrinsic correlation property and the auxiliary intrinsic correlation property". The target talent demand time series and the auxiliary talent demand time series are fused based on the attention mechanism by means of the intrinsic correlation properties, which improves the reflection of internal properties of target talents in the fusion result.

The method for forecasting the demand for a talent as shown in Fig. 2 includes:
S210: determining, based on the historical recruitment data, a target talent demand time series and an auxiliary talent demand time series.
S220: determining, based on the historical recruitment data and company-side information, a target intrinsic correlation property related to the target talent demand time series and an auxiliary intrinsic correlation property related to the auxiliary talent demand time series.

The company-side information refers to information that may reflect other properties of a company, such as the year when the company is established, the city where the company is located, business area of the company, and staff size information of the company. The property of the Company's recruitment tendency may be determined based on the company-side information, and then the correlation between the company and the position may be determined.

Intrinsic correlation property is used to characterize the intrinsic correlation between the company and the position according to company attribute properties, such as characterize the relationship between the company and the position. For example, the target intrinsic correlation property may refer to intrinsic correlation property between the target company and the target position in the target talent. Intrinsic correlation property may be determined from a company-position matrix and the company-side information, and then characterize the tendency of recruitment of different companies on different positions.

Specifically, a recruitment matrix between different companies and different positions is established based on the historical recruitment data, intrinsic correlation properties between different companies and different positions are obtained from the recruitment matrix by matrix decomposition. Then the target intrinsic correlation property between a target company and a target position included in the target talent demand time series is determined, on the basis of the intrinsic correlation properties between different companies and different positions, and in combination with company attribute properties obtained from the analysis of company-side information. At the same time, the intrinsic correlation properties between a target company and all positions and the intrinsic correlation properties between all companies and a target position in the auxiliary talent demand time series are determined as auxiliary intrinsic correlation properties related to the auxiliary talent demand time series. For example, the intrinsic correlation properties between different companies and different positions are determined by a recommendation algorithm.

Correlation properties between companies and positions related to the talent demand time series are determined based on the historical recruitment data and the company-side information, which reduces the dimensionality of talent demand time series information and improves the efficiency of talent demand forecasting; at the same time, the demand for a talent is forecasted based on the inherent correlation properties of the time series, which not only forecasts the trend from the surface of company recruitment data, but also improves the accuracy of talent demand forecasting.

Alternatively, the step S220 may include:
determining, based on the historical recruitment data, an intrinsic property of a target company, an intrinsic property of a target position, an intrinsic property of an auxiliary company and an intrinsic property of an auxiliary position;
determining, based on the company-side information, an attribute property of the target company and an attribute property of the auxiliary company;
determining the target intrinsic correlation property related to the target talent demand time series based on the intrinsic property of the target company, the intrinsic property of the target position, and the attribute property of the target company; and
determining the auxiliary intrinsic correlation property related to the auxiliary talent demand time series based on the intrinsic property of the target company, the intrinsic property of the target position, the attribute property of the target company, the intrinsic property of the auxiliary company, the intrinsic property of the auxiliary position, and the attribute property of the auxiliary company.

The intrinsic property of a company refers to intrinsic attribute property of the company, such as properties that have an impact on the recruitment for a position. The intrinsic property of position refer to an intrinsic attribute property of the position, such as influence of a position on a company. The attribute property of the company refer to a property that can characterize company-side information, such as a property that synthesize or represent attribute information of a company.

As an example, a recruitment matrix between different companies and different positions is established based on the historical recruitment data, and inherent properties of a target company and an auxiliary company are obtained, from the recruitment matrix by matrix decomposition, as intrinsic properties of the target company and intrinsic property of the auxiliary company, as well as inherent properties of a target position and an auxiliary position are obtained as intrinsic properties of the target position and intrinsic properties of the auxiliary position. Individual property of each object are clarified based on the determined intrinsic property, an attribute property of the company is determined in combination with attribute information of the company, and inherent correlation property between different companies and positions are determined as intrinsic correlation property by using the individual properties of the companies and the positions and the attribute properties of the company.

The target intrinsic correlation property refer to relevant intrinsic property between the target company and the target position in the target talent. Therefore, the intrinsic correlation between the target company and the target position is determined based on the determined intrinsic property of the target company, intrinsic property of the target position and the attribute property of the target company. Similarly, the auxiliary intrinsic correlation property refers to the relevant intrinsic property between the auxiliary talent and the target talent. Therefore, the intrinsic correlations between the target company and an auxiliary company, between the target company and an auxiliary position, and between the auxiliary company and the auxiliary position may be determined based on the determined intrinsic property of the target company, intrinsic property of the target position, an attribute property of the target company, the intrinsic property of the auxiliary company, intrinsic property of the auxiliary position and an attribute property of the auxiliary company, and the influence of the intrinsic correlations on the target company and the target position may be determined, to form the auxiliary intrinsic correlation property.

Intrinsic correlation property between different objects is determined based on the intrinsic properties and attribute properties of different objects, and then the target intrinsic correlation property and the auxiliary intrinsic correlation property are determined, thereby mining the intrinsic properties and relevant attribute properties in the target talent demand time series and the auxiliary talent demand time series, then mining the intrinsic correlation properties between different objects, forecasting a fine-grained demand for a talent, and improving the accuracy of forecasting.

Alternatively, the determining the auxiliary intrinsic correlation property related to the auxiliary talent demand time series based on the intrinsic property of the target company, the intrinsic property of the target position, the attribute property of the target company, the intrinsic property of the auxiliary company, the intrinsic property of the auxiliary position, and the attribute property of the auxiliary company, includes:
determining a first auxiliary intrinsic correlation property related to the auxiliary talent demand time series based on the intrinsic property of the target company, the intrinsic property of the auxiliary position, and the attribute property of the target company; and
determining a second auxiliary intrinsic correlation property related to the auxiliary talent demand time series based on the intrinsic property of the auxiliary company, the intrinsic property of the target position, and the attribute property of the auxiliary company.

The first auxiliary intrinsic correlation property is used to characterize the intrinsic correlation between the target company and an auxiliary position, that is, to characterize the target company vs an auxiliary position in the auxiliary talents. The second auxiliary intrinsic correlation property are used to characterize the intrinsic correlation between an auxiliary company and the target position, that is, to characterize the auxiliary company vs target position in the auxiliary talent.

As an example, if the target talent refers to the demand of a target company on a target position, the auxiliary talent include first auxiliary talent, i.e., the demand of the target company on an auxiliary position, and a second auxiliary talent, i.e., the demand of an auxiliary company on the target position. Determining the intrinsic correlation in the first auxiliary talent in the auxiliary talent demand time series, refers to determining the correlation between the target company and the auxiliary position based on the intrinsic property of the target company, the intrinsic property of the auxiliary position and the attribute property of the target company; and determining the intrinsic correlation in the second auxiliary talent in the auxiliary talent demand time series refers to determining the correlation between the auxiliary company and the target position based on the intrinsic property of the auxiliary company, the intrinsic property of the target position and the attribute property of the auxiliary company.

The auxiliary talent demand time series is characterized by the first auxiliary intrinsic correlation property and the second auxiliary intrinsic correlation property, realizing the determining the intrinsic correlation between the auxiliary talent demand time series and the target talent demand time series, and further reflecting the target intrinsic correlation property from another level, thereby improving the importance of introducing an auxiliary talent in forecasting the demand for a target talent, and improving the accuracy of the target talent demand forecasting.

S230: fusing, based on an attention mechanism, the target talent demand time series and the auxiliary talent demand time series based on the target intrinsic correlation property and the auxiliary intrinsic correlation property, to obtain a forward demand time series.

The attention mechanism refers to a resource allocation scheme that is the main means to solve the problem of information overload. Since the company's demand for a talent is forecasted from the information acquired at multiple levels, the amount of data acquired is large. In addition, the helpfulness of input data to decision-making is difficult to identify. Therefore, the fusion of the talent demand time series based on the attention mechanism improves the accuracy of determining important information in the talent demand time series, thereby improving the accuracy of talent demand forecasting.

As an example, the talent demand time series is pre-processed based on an attention mechanism learning model and a forecasting target to comply with the input of the attention mechanism learning model. The pre-processing includes, but is not limited to, series differential stabilization, series symbolic discretization, series dimension expansion, and the like. By the pre-processing, a forward demand time series that facilitates the processing of the attention mechanism learning model and reflects the trend of talent recruitment demand is obtained.

Alternatively, the step S230 includes:
determining, based on the target intrinsic correlation property and the auxiliary intrinsic correlation property, attention weights of the target talent demand time series and the auxiliary talent demand time series respectively; and
fusing the target talent demand time series and the auxiliary talent demand time series based on the attention weights of the target talent demand time series and the auxiliary talent demand time series.

The attention weights of the time series are used to reflect the influence of different time series on the decision-making in talent demand forecasting

Specifically, the corresponding attention weights of the target talent demand time series and the auxiliary talent demand time series are determined according to the influences of the target intrinsic correlation property and the auxiliary intrinsic correlation property on the final decision, and the target talent demand time series and the auxiliary talent demand time series are concatenated according to the values of the attention weights to obtain a fusion result.

As an example, the attention weights of the talent demand time series at different levels are obtained by a fully connected layer in the attention mechanism learning model, and then the talent demand time series at different levels are summed up according to the weights, to obtain the fusion result.

The determination of the attention weights of the target talent demand time series and the auxiliary talent demand time series realizes the determination of the trend and periodic importance of the time series at different levels, and the time series are fused based on the importance, so that the fusion result is more accurate in the decision-making in forecasting the new demand information for a target talent.

S240: determining, based on the forward demand time series, new demand information for the target talent.

An attention mechanism learning model is trained based on the forward demand time to obtain a trained model, the target talent is used as the input of the trained model, and the output result obtained is the new demand information for target talent.

According to the technical solution of the embodiment of the present disclosure, the target talent demand time series and the auxiliary talent demand time series are fused based on the attention mechanism by using the intrinsic correlation property, which improves the reflection on the intrinsic property of the target talent in the fusion result, and then improves the accuracy of forecasting the new demand information for the target talent through fine-grained information.

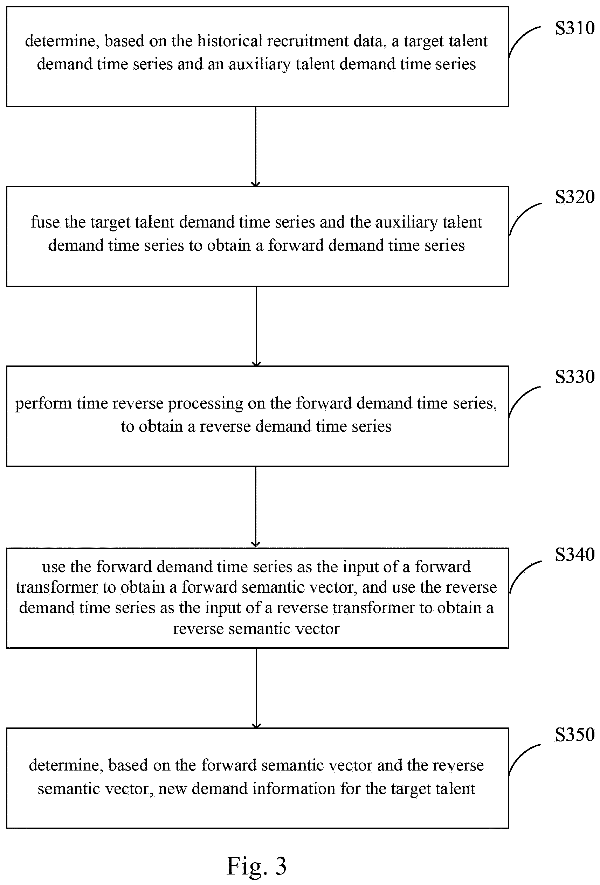

Fig. 3 is a flowchart of a method for forecasting demand for a talent according to an embodiment of the present disclosure. The embodiment of the present disclosure is optimized on the basis of the technical solutions of the foregoing embodiments.

Alternatively, the operation "determining, based on the forward demand time series, new demand information for the target talent" is refined into "performing time reverse processing on the forward demand time series, to obtain a reverse demand time series; using the forward demand time series as the input of a forward transformer to obtain a forward semantic vector, and using the reverse demand time series as the input of a reverse transformer to obtain a reverse semantic vector; and determining, based on the forward semantic vector and the reverse semantic vector, the new demand information for the target talent". By determining a reverse demand time series through the time revere processing, and determining the new demand information for the target talent based on the forward demand time series and the reverse demand time series at the same time, the basis for demand information determination is enriched, thereby improving the accuracy of new demand information determination.

The method for forecasting the demand for a talent as shown in Fig. 3 may include:
S310: determining, based on the historical recruitment data, a target talent demand time series and an auxiliary talent demand time series.
S320: fusing the target talent demand time series and the auxiliary talent demand time series to obtain a forward demand time series.
S330: performing time reverse processing on the forward demand time series, to obtain a reverse demand time series.

The time reverse processing refers to determining information at reverse time by using a periodic trend of the information included in the forward demand time series.

Specifically, the forward demand time series reflects the trend close to a forecast point, and the reverse demand time series reflects the periodicity far away from the forecast point. The reverse demand time series is obtained based on the forward demand time series, and the periodicity of talent demand information is used to expand the scope of the time series.

As an example, the forward demand time series may include talent recruitment information of the last year, and after the time reverse processing is performed thereon, the talent recruitment information of the same period in the last year is obtained as the reverse demand time series.

S340: using the forward demand time series as the input of a forward transformer to obtain a forward semantic vector, and using the reverse demand time series as the input of a reverse transformer to obtain a reverse semantic vector.

The transformer refers to a model that uses attention mechanism to increase the speed of model training. The semantic vector refers to the input format that is adjusted to adapt to the input and output characteristics of a machine learning model.

Specifically, taking into account the periodicity of recruitment information in the talent market, not only the information near the forecast point but also the data of the same period as the forecast point in previous years are focused. Therefore, a forward transformer and a reverse transformer are configured, where the forward transformer focuses on the trend near the forecast point, and the reverse transformer focuses on the periodicity of the same period in previous years. The forward transformer directly uses the forward demand time series, while the reverse transformer uses the reverse demand time series obtained by time reversing of the forward demand time series, and the forward demand time series and the reverse demand time series are transformed by the respective transformers into the forward semantic vector and the reverse semantic vector which are adapted to the input and output characteristics of the model.

Alternatively, the forward transformer and the reverse transformer are obtained by training based on parameter sharing.

The training based on parameter sharing refers to determine the similarity of tasks of the two transformers by using the periodicity of recruitment information in the talent market. Therefore, in the training process, the parameters of the two transformer models are shared for learning by a parameter soft-sharing method in multi-task learning to improve the training effect; and the periodicity is used to improve the accuracy of the training results.

S350: determining, based on the forward semantic vector and the reverse semantic vector, new demand information for the target talent.

An attention mechanism learning model is trained by using forward semantic vector and the reverse semantic vector to obtain a training model, the target talent is used as the input of the training model, and the output result obtained is the new demand information for the target talent.

Alternatively, the step S350 includes:
aggregating the forward semantic vector and the reverse semantic vector to obtain an omnidirectional semantic vector; and
fusing, based on an attention mechanism, the forward semantic vector and the reverse semantic vector according to the omnidirectional semantic vector, and determining the new demand information for the target talent based on the fusion result.

Specifically, the forward semantic vector and the reverse semantic vector, which are obtained by the two transformers of the same structure, are concatenated to obtain the omnidirectional semantic vector corresponding to the complete time series. The omnidirectional semantic vector reflects complete historical recruitment data information of the target talent. According to the feedback on the importance of information included in the omnidirectional semantic vector, the forward semantic vector and the reverse semantic vector are concatenated, and the result of the concatenating is the fusion result. An attention mechanism learning model is trained by using the fusion result to obtain a training model, and then a forecasting result of a new demand information for the target talent is obtained according to the training model.

The forward semantic vector and the reverse semantic vector are fused according to the aggregated omnidirectional semantic vector, the historical recruitment data is accurately expressed by the fusion result, thereby improving the accuracy of determining the new demand information according to the fusion result.

Alternatively, the fusing, based on an attention mechanism, the forward semantic vector and the reverse semantic vector according to the omnidirectional semantic vector includes:
determining, according to the omnidirectional semantic vector, attention weights of the forward semantic vector and the reverse semantic vector respectively; and
fusing the forward semantic vector and the reverse semantic vector according to the attention weights of the forward semantic vector and the reverse semantic vector.

Specifically, the attention weight of the forward semantic vector is determined by a fully connected layer in the model based on the forward semantic vector and the omnidirectional semantic vector; the attention weight of the reverse semantic vector is determined likewise according to the reverse semantic vector and the omnidirectional semantic vector; and weighted summation is performed on the forward semantic vector and the reverse semantic vector according to the attention weight of the forward semantic vector and the attention weight of the reverse semantic vector, to obtain the fusion result.

The attention weight of each semantic vector is determined through the omnidirectional semantic vector. The attention weights represent the importance of the trend and periodicity of recruitment information included in the forward semantic vector and the reverse semantic vector in the new demand forecasting task, and the different importance characterizes contributions of the semantic vectors to the forecasting result, thereby improving the contribution of the fusion result to the accuracy of the forecasting result.

According to the technical solution of embodiments of the present disclosure, as the bidirectional transformers are introduced, the bidirectional demand time series may be used to accurately reflect the periodicity of historical recruitment data, which improves the efficiency and accuracy of fine-grained forecasting for each company; and the machine learning model based on the attention mechanism has good interpretability and strong versatility.

As a preferred implementation of the method for forecasting the demand for a talent, an embodiment of the present disclosure may include:
First, recruitment data is collected. Company recruitment data in the recruitment market may be stored. Here, large-scale data is managed by a cluster. Before analyzing and forecasting, the recruitment data may be desensitized to remove personal information from the recruitment data, and only company and position related recruitment demand data is retained.

The collected recruitment data is subjected to multi-level information processing, to extract multi-level information. The multi-level information processing method may include following steps:
A company-position matrix is determined. The recruitment matrix records recruitment quantities of each company on each position. For example, the number in the second row and second column of the matrix represents the total recruitment quantity of company 2 on position 2. Intrinsic properties of companies and positions may be obtained from the recruitment matrix by matrix decomposition. The intrinsic properties may reflect the relation of different companies on talent preferences.

A talent demand time series is determined. The time series counts the talent demand quantity in each time period based on the quantity of job postings, for example, the quantity of job postings issued by a company on a certain position each month from 2014 to 2020. At the same time, different levels of time series are calculated based on fine-grained talent demand time series. That is, the fine-grained talent demand time series corresponds to a target talent demand time series, and the different levels of time series correspond to auxiliary talent demand time series. For example, the different levels of time series include a series of a company on all positions, a series of a position in the entire talent market, a series of the entire talent market, and the like. These different levels of time series may help the model learn the market form and supplement the deficiencies of the fine-grained demand time series. The time series are pre-processed according to the adopted machine learning model and a forecasting target, to comply with the input and output of the model. These processes include, but are not limited to, series differential stabilization, series symbolic discretization, series dimension expansion, and the like. By the pre-processing, a multivariate time series that facilitates the processing of the machine learning model and reflects the trend of talent recruitment demand is obtained.

Company-side information, such as the year when the company is established, the city where the company is located, business area of the company, and staff size information of the company, is determined. Then, the information is embedded by a machine learning method to obtain a comprehensive embedding representation of the company information.

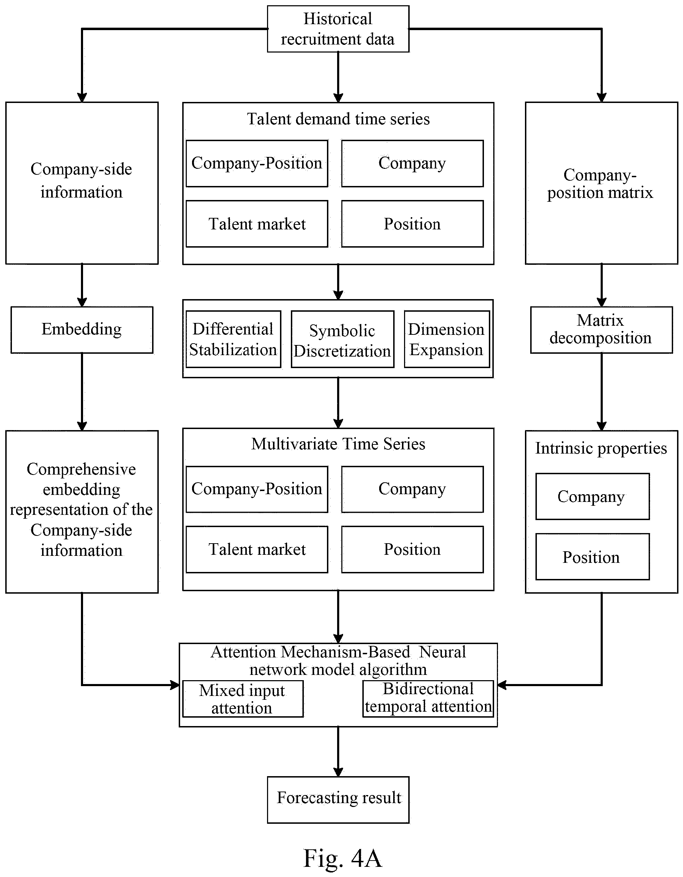

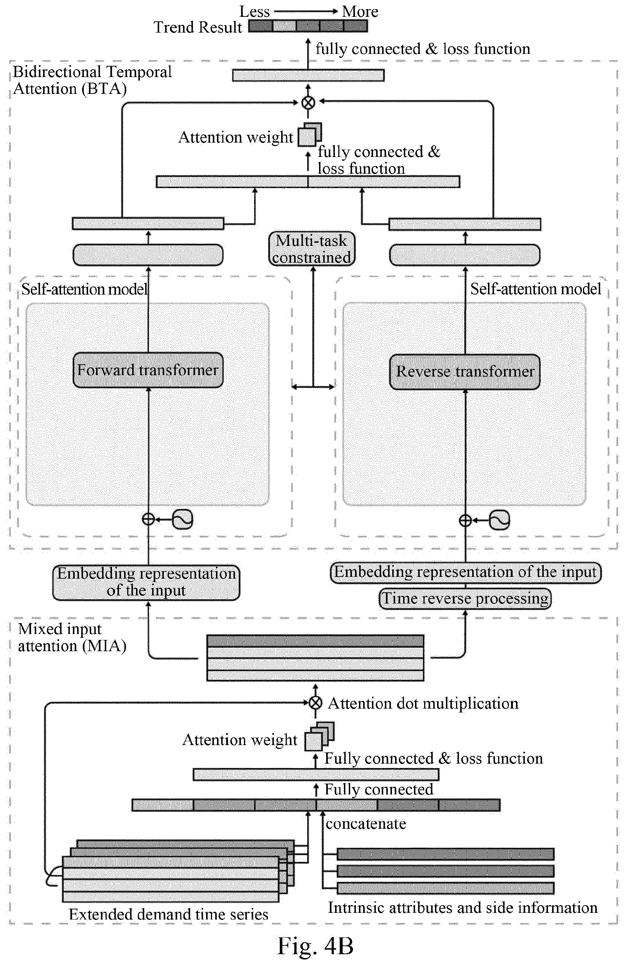

A fine-grained talent demand is forecasted based on the extracted multi-level information by using the machine learning model. For example, a neural network model algorithm based on an attention mechanism is adopted. The neural network model algorithm may be selected according to the characteristics of data, and may include two modules, one is Mixed Input Attention (MIA) based on an attention mechanism, and the other is Bidirectional Temporal Attention (BTA) based on an attention mechanism. The flowchart of talent demand forecasting based on an attention mechanism is shown in Fig. 4A, and the structure diagram of a neural network model based on an attention mechanism is shown in Fig. 4B.

In the model, the mixed input attention part based on the attention mechanism first concatenates three types of multi-level information, calculates attention weights of different levels of talent demand time series through a fully connected layer, and then adds the different levels of talent demand time series according to the weights to obtain a mixed input, i.e., a forward demand time series. The different levels of talent demand time series may include a demand time series of a target company on a target position, a demand time series of the target company on other positions, and/or a demand time series of other companies on the target position. The mixed input may skillfully make up for deficiencies in the fine-grained information according to the company information and intrinsic properties by using coarse-grained information, such as missing information, instability, and inconspicuous periodicity, thereby improving the accuracy of the forecasting result.

In the model, considering the periodicity of market information, the bidirectional temporal attention part based on the attention mechanism not only focuses on the information near the forecast point, but also focuses on the data of the same period last year. Therefore, this module contains k forward transformers and k reverse transformers, where k is an integer more than or equal to 1, and the specific value thereof may be set according to the actual situation of model training. The forward transformer focuses on the trend near the forecast point, and the reverse transformer focuses on the periodicity of the same period last year. The forward transformer directly uses the mixed input, i.e., the forward demand time series of the previous module, while the reverse transformer uses the reverse time series of the mixed input, i.e., the reverse demand time series. Then the two time series are passed through the two self-attention transformers of the same structure, to obtain intermediate representations of the two time series. Considering the similarity of tasks of the two transformers, the parameters of the two self-attention transformers are shared for learning by a parameter soft-sharing method in multi-task learning during training, to improve the training effect. Then the intermediate representations of each series are aggregated into a vector representation, and then the two vector representations are concatenated together, the attention weight of each vector representation is calculated by the fully connected layer, and then weighted summation is performed on the different vector representations according to the weights. The attention weight of each vector representation represents the importance of different trends and periodicities in the forecasting task, and different weights may be required for different companies and positions. After the weighted summation, a vector representation is output by the fully connected layer, and a final new demand forecasting result for a target talent is obtained.

According to the technical solution of embodiments of the present disclosure, the future talent recruitment demand of each company on each position is forecasted based on the public Internet recruitment data. The attention mechanism-based machine learning algorithm has good interpretability, may be applied to various industries on a large scale, is conducive to the replication and migration of the scheme, and has strong versatility. The fine-grained forecasting for each company may help the company better analyze its competitors in the talent market and formulate a reasonable recruitment plan, thereby improving the accuracy and efficiency of the forecasting. The public Internet recruitment data used is easy to acquire, and can directly reflect the recruitment behaviors of companies, and can help companies accurately grasp their own talent competitiveness for the forecasting of the recruitment behaviors of companies in the talent market.

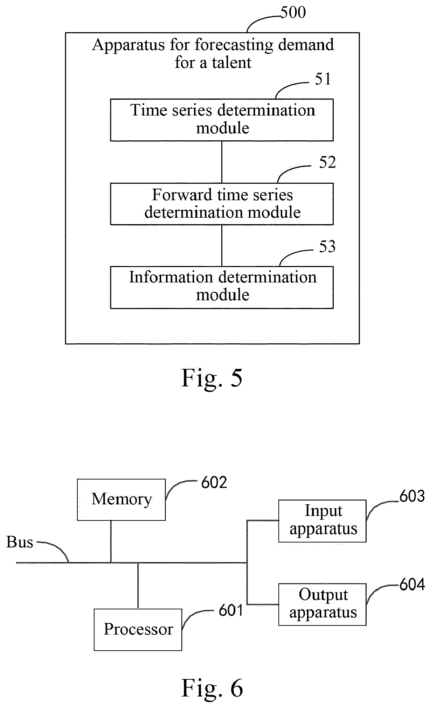

Fig. 5 is a structure diagram of an apparatus for forecasting demand for a talent according to an embodiment of the present disclosure. This embodiment is suitable for a situation of targeted forecasting for company's future demand for a talent based on company's public historical recruitment data. The apparatus is implemented by means of software and/or hardware, and may be integrated in an electronic device, for example, the device may be an electronic device with communication and computing capabilities such as a back-end server.

An apparatus 500 for forecasting a talent demand as shown in Fig. 5 includes: a time series determination module 51, a forward time series determination module 52, and an information determination module 53.

The time series determination module 51 is configured to determine, based on historical recruitment data, a target talent demand time series and an auxiliary talent demand time series;
The forward time series determination module 52 is configured to fuse the target talent demand time series and the auxiliary talent demand time series, to obtain a forward demand time series;
The information determination module 53 is configured to determine, based on the forward demand time series, new demand information for the target talent.

According to the technical solution of embodiments of the present disclosure, a target talent demand time series and an auxiliary talent demand time series are determined by analyzing company's historical recruitment data, and new demand information for a target talent is determined based on a historical trend of company's demand for the talent, thereby improving the pertinence of company's talent demand forecasting; and talent demand information is determined from multiple aspects based on the target talent demand time series and the auxiliary talent demand time series, thereby improving the accuracy of talent demand forecasting.

Alternatively, the forward time series determination module includes:
an intrinsic correlation property determination unit, configured to determine, based on the historical recruitment data and company-side information, a target intrinsic correlation property related to the target talent demand time series and an auxiliary intrinsic correlation property related to the auxiliary talent demand time series; and
a time series fusion unit, configured to fuse, based on an attention mechanism, the target talent demand time series and the auxiliary talent demand time series based on the target intrinsic correlation property and the auxiliary intrinsic correlation property.

Alternatively, the time series fusion unit includes:
a series weight determination subunit, configured to determine, based on the target intrinsic correlation property and the auxiliary intrinsic correlation property, attention weights of the target talent demand time series and the auxiliary talent demand time series respectively; and
a series fusion subunit, configured to fuse the target talent demand time series and the auxiliary talent demand time series based on the attention weights of the target talent demand time series and the auxiliary talent demand time series.

Alternatively, the intrinsic correlation property determination unit includes:
an intrinsic property determination subunit, configured to determine, based on the historical recruitment data, an intrinsic property of a target company, an intrinsic property of a target position, an intrinsic property of an auxiliary company and an intrinsic property of an auxiliary position;
an attribute property determination subunit, configured to determine, based on the company-side information, an attribute property of the target company and an attribute property of the auxiliary company;
a target property determination subunit, configured to determine the target intrinsic correlation property related to the target talent demand time series based on the intrinsic property of the target company, the intrinsic property of the target position, and the attribute property of the target company; and
an auxiliary property determination subunit, configured to determine the auxiliary intrinsic correlation property related to the auxiliary talent demand time series based on the intrinsic property of the target company, the intrinsic property of the target position, the attribute property of the target company, the intrinsic property of the auxiliary company, the intrinsic property of the auxiliary position, and the attribute property of the auxiliary company.

Alternatively, the auxiliary property determination subunit may be further configured to:
determine a first auxiliary intrinsic correlation property related to the auxiliary talent demand time series based on the intrinsic property of the target company, the intrinsic property of the auxiliary position, and the attribute property of the target company; and
determine a second auxiliary intrinsic correlation property related to the auxiliary talent demand time series based on the intrinsic property of the auxiliary company, the intrinsic property of the target position, and the attribute property of the auxiliary company.

Alternatively, the information determination module includes:
a reverse time series determination unit, configured to perform time reverse processing on the forward demand time series, to obtain a reverse demand time series;
a semantic vector determination unit, configured to use the forward demand time series as the input of a forward transformer to obtain a forward semantic vector, and use the reverse demand time series as the input of a reverse transformer to obtain a reverse semantic vector; and
a new demand information determination unit, configured to determine, based on the forward semantic vector and the reverse semantic vector, the new demand information for the target talent.

Alternatively, the forward transformer and the reverse transformer are obtained by training based on parameter sharing.

Alternatively, the new demand information determination unit includes:
a semantic vector aggregation subunit, configured to aggregate the forward semantic vector and the reverse semantic vector, to obtain an omnidirectional semantic vector; and
a semantic vector fusion subunit, configured to fuse, based on the attention mechanism, the forward semantic vector and the reverse semantic vector according to the omnidirectional semantic vector, and determine the new demand information for the target talent based on a result of the fusing.

Alternatively, the semantic vector fusion subunit is further configured to:
determine, according to the omnidirectional semantic vector, attention weights of the forward semantic vector and the reverse semantic vector respectively; and
fuse the forward semantic vector and the reverse semantic vector according to the attention weights of the forward semantic vector and the reverse semantic vector.

The aforementioned apparatus for forecasting a talent demand can execute the method for forecasting a talent demand according to any embodiment of the present disclosure, and has corresponding functional modules for executing the method for forecasting a talent demand and corresponding beneficial effects.

According to some embodiments of the present disclosure, an electronic device and a readable storage medium are provided.

As shown in Fig. 6, which is a block diagram of an electronic device of a method for forecasting demand for a talent according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 6, one processor 601 is used as an example.

The memory 602 is a non-transitory computer readable storage medium provided by embodiments of the present disclosure. The memory stores instructions executable by at least one processor, so that the at least one processor performs the method for forecasting demand for a talent provided by embodiments of the present disclosure. The non-transitory computer readable storage medium of embodiments of the present disclosure stores computer instructions for causing a computer to perform the method for forecasting demand for a talent provided by embodiments of the present disclosure.

The memory 602, as a non-transitory computer readable storage medium, may be used to store non-transitory software programs, non-transitory computer executable programs and modules, such as program instructions/modules corresponding to the method for forecasting demand for a talent in embodiments of the present disclosure (for example, the time series determination module 51, the forward time series determination module 52, and the information determination module 53 shown in Fig. 5). The processor 601 executes the non-transitory software programs, instructions, and modules stored in the memory 602 to execute various functional applications and data processing of the server, that is, to implement the method for forecasting demand for a talent in the foregoing method embodiments.

The memory 602 may include a storage program area and a storage data area, where the storage program area may store an operating system and at least one function required application program; and the storage data area may store data created by the use of the electronic device according to the method for forecasting demand for a talent, etc. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device of the method for forecasting demand for a talent through a network. Examples of the above network include but are not limited to the Internet, intranet, local area network, mobile communication network, and combinations thereof.

The electronic device of the method for forecasting demand for a talent may further include: an input apparatus 603 and an output apparatus 604. The processor 601, the memory 602, the input apparatus 603, and the output apparatus 604 may be connected through a bus or in other methods. In Fig. 6, connection through a bus is used as an example.

The input apparatus 603 may receive input digital or character information, and generate key signal inputs related to user settings and function control of the electronic device of the method for forecasting demand for a talent, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

According to the technical solution of embodiments of the present disclosure, a target talent demand time series and an auxiliary talent demand time series are determined by analyzing company's historical recruitment data, and new demand information for a target talent is determined based on a historical trend of company's talent demand, thereby improving the pertinence of company's talent demand forecasting; and demand information for a talent is determined from multiple aspects based on the target talent demand time series and the auxiliary talent demand time series, thereby improving the accuracy of talent demand forecasting.

It should be understood that the various forms of processes shown above may be used to reorder, add, or delete steps. For example, the steps described in embodiments of the present disclosure may be performed in parallel, sequentially, or in different orders. As long as the desired results of the technical solution disclosed in embodiments of the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for forecasting demand for a talent, comprising:
determining (110, 210, 310), based on historical recruitment data, a target talent demand time series and an auxiliary talent demand time series;
fusing (120, 320) the target talent demand time series and the auxiliary talent demand time series, to obtain a forward demand time series; and
determining (130, 240), based on the forward demand time series, new demand information for the target talent.

2. The method according to claim 1, wherein the fusing (120) the target talent demand time series and the auxiliary talent demand time series comprises:
determining (220), based on the historical recruitment data and company-side information, a target intrinsic correlation property related to the target talent demand time series and an auxiliary intrinsic correlation property related to the auxiliary talent demand time series; and
fusing (230), based on an attention mechanism, the target talent demand time series and the auxiliary talent demand time series based on the target intrinsic correlation property and the auxiliary intrinsic correlation property.

3. The method according to claim 2, wherein the fusing (230), based on the attention mechanism, the target talent demand time series and the auxiliary talent demand time series based on the target intrinsic correlation property and the auxiliary intrinsic correlation property comprises:
determining, based on the target intrinsic correlation property and the auxiliary intrinsic correlation property, attention weights of the target talent demand time series and the auxiliary talent demand time series respectively; and
fusing the target talent demand time series and the auxiliary talent demand time series based on the attention weights of the target talent demand time series and the auxiliary talent demand time series.

4. The method according to claim 2 or 3, wherein the determining (220), based on the historical recruitment data and the company-side information, the target intrinsic correlation property related to the target talent demand time series and the auxiliary intrinsic correlation property related to the auxiliary talent demand time series comprises:
determining, based on the historical recruitment data, an intrinsic property of a target company, an intrinsic property of a target position, an intrinsic property of an auxiliary company and an intrinsic property of an auxiliary position;
determining, based on the company-side information, an attribute property of the target company and an attribute property of the auxiliary company;
determining the target intrinsic correlation property related to the target talent demand time series based on the intrinsic property of the target company, the intrinsic property of the target position, and the attribute property of the target company; and
determining the auxiliary intrinsic correlation property related to the auxiliary talent demand time series based on the intrinsic property of the target company, the intrinsic property of the target position, the attribute property of the target company, the intrinsic property of the auxiliary company, the intrinsic property of the auxiliary position, and the attribute property of the auxiliary company.

5. The method according to claim 4, wherein the determining the auxiliary intrinsic correlation properties related to the auxiliary talent demand time series comprises:
determining a first auxiliary intrinsic correlation property related to the auxiliary talent demand time series based on the intrinsic property of the target company, the intrinsic property of the auxiliary position, and the attribute property of the target company; and
determining a second auxiliary intrinsic correlation property related to the auxiliary talent demand time series based on the intrinsic property of the auxiliary company, the intrinsic property of the target position, and the attribute property of the auxiliary company.

6. The method according to one of the preceding claims , wherein the determining (130, 240), based on the forward demand time series, new demand information for target talent comprises:
performing (330) time reverse processing on the forward demand time series, to obtain a reverse demand time series;
using (340) the forward demand time series as the input of a forward transformer to obtain a forward semantic vector, and using the reverse demand time series as the input of a reverse transformer to obtain a reverse semantic vector; and
determining (350), based on the forward semantic vector and the reverse semantic vector, the new demand information for the target talent.

7. The method according to claim 6, wherein the forward transformer and the reverse transformer are obtained by training based on parameter sharing.

8. The method according to claim 6 or 7, wherein the determining (350), based on the forward semantic vector and the reverse semantic vector, the new demand information for the target talent, comprises:
aggregating the forward semantic vector and the reverse semantic vector, to obtain an omnidirectional semantic vector; and
fusing, based on the attention mechanism, the forward semantic vector and the reverse semantic vector according to the omnidirectional semantic vector, and determining the new demand information for the target talent based on a result of the fusing.

9. The method according to claim 8, wherein the fusing, based on the attention mechanism, the forward semantic vector and the reverse semantic vector according to the omnidirectional semantic vector comprises:
determining, according to the omnidirectional semantic vector, attention weights of the forward semantic vector and the reverse semantic vector respectively; and
fusing the forward semantic vector and the reverse semantic vector according to the attention weights of the forward semantic vector and the reverse semantic vector.

10. An apparatus (500) for forecasting demand for a talent, comprising:
a time series determination module (51), configured to determine (110, 210, 310), based on historical recruitment data, a target talent demand time series and an auxiliary talent demand time series;
a forward time series determination module (52), configured to fuse (120, 320) the target talent demand time series and the auxiliary talent demand time series, to obtain a forward demand time series; and
an information determination module (53), configured to determine (130, 240), based on the forward demand time series, new demand information for the target talent.

11. The apparatus according to claim 10, wherein the forward time series determination module (52) comprises:
an intrinsic correlation property determination unit, configured to determine (220), based on the historical recruitment data and company-side information, a target intrinsic correlation property related to the target talent demand time series and an auxiliary intrinsic correlation property related to the auxiliary talent demand time series; and
a time series fusion unit, configured to fuse (230), based on an attention mechanism, the target talent demand time series and the auxiliary talent demand time series based on the target intrinsic correlation property and the auxiliary intrinsic correlation property.

12. The apparatus according to claim 11, wherein the time series fusion unit comprises:
a series weight determination subunit, configured to determine, based on the target intrinsic correlation property and the auxiliary intrinsic correlation property, attention weights of the target talent demand time series and the auxiliary talent demand time series respectively; and
a series fusion subunit, configured to fuse the target talent demand time series and the auxiliary talent demand time series based on the attention weights of the target talent demand time series and the auxiliary talent demand time series.

13. An electronic device, comprising:
at least one processor; and
a memory communicatively connected with the at least one processor; wherein, the memory stores instructions executable by the at least one processor, and the instructions, when executed by the at least one processor, causes the at least one processor to execute the method according to any one of claims 1-9.

14. A non-transitory computer-readable storage medium storing computer instructions, wherein the computer instructions, when executed by a processor, cause the processor to execute the method according to any one of claims 1-9.

15. A computer program product comprising a computer program, the computer program, when executed by a processor, causes the processor to implement the method according to any one of claims 1-9.
